# EUROPEAN PATENT APPLICATION

(11) **EP 2 846 247 A1**
(43) Date of publication of application: **11.03.2015**
(21) Application number: 14177178.2
(22) Date of filing: 15.07.2014
(51) Int. Cl.: G06F 3/0488

(54) **Electronic device and program**

(30) Priority: 09.09.2013 JP 2013186681
(71) Applicant: FUJITSU LIMITED, Kawasaki-shi, Kanagawa 211-8588 (JP)
(72) Inventor: Jogo, Arata, Kawasaki-shi, Kanagawa 211-8588 (JP)
(74) Representative: Wilding, Frances Ward

(57) **Abstract**

In an electronic device (10), a processor (12) determines whether there is one touch region or two or more touch regions touched in a first region existing in an outer periphery portion excluding a central portion of a touch panel (11) . Then, in a case where it is determined that there is one touch region, the processor (12) validates the touch operation. In a case where it is determined that there are two or more touch regions, the processor invalidates the touch operation.

## Description

### FIELD

The embodiment discussed herein is related to an electronic device and a program.

### BACKGROUND

In recent years, an electronic device installed with a touch panel is increasing in its number. A portable terminal may be listed as such electronic device. Conventionally, in order to improve convenience of a user, downsizing of the electronic device has been desired, while on the other hand, increasing a size of a display unit, or a touch panel, of the electronic device has also been desired. Therefore, on a surface, on which the touch panel is provided (hereinafter, simply referred to as a "display surface"), of a housing of the electronic device, as a result of the touch panel being arranged up to near an outer periphery of the display surface, a region between the touch panel and the outer periphery of the display surface (or, a "frame") tends to be narrow. That is, "narrowing of the frame" of the electronic device is progressing.

When a user holds the electronic device having the narrow frame, there is a possibility that a finger of a holding hand of a user touches the touch panel, and that the electronic device executes a processing operation not intended by the user. In order to prevent this wrong operation, conventionally, there has been proposed an electronic device that executes control of not accepting a touch to an "outer periphery portion" (or, an "outer region") of the touch panel as a processing operation. A conventional example is described in Japanese Laid-open Patent Publication No. 2012-194997, Japanese Laid-open Patent Publication No. 2001-154766, Japanese Laid-open Patent Publication No. 2008-033797, Japanese Laid-open Patent Publication No. 2011-237945, Japanese Laid-open Patent Publication No. 2010-134895, and Japanese Laid-open Patent Publication No. 2012-093932.

When the control of not accepting the processing operation to the outer region of the touch panel at all is executed, however, the convenience of a user may be decreased even though a size of the touch panel has been increased aiming at an improvement of the convenience of the user.

Accordingly, it is desirable to provide an electronic device and a program capable of suppressing a wrong operation by the user and a decrease in the convenience of the user.

### SUMMARY

According to an aspect of an embodiment, an electronic device includes a touch panel and a processor connected to the touch panel. The processor performs determination whether there is one touch region or two or more touch regions touched in a first region existing in an outer periphery portion excluding a central portion of the touch panel. The processor validates a touch operation in a case where it is determined that there is one touch region, and the processor invalidates the touch operation in a case where it is determined that there are two or more touch regions.

### BRIEF DESCRIPTION OF DRAWINGS

FIG. 1 is a block diagram illustrating one example of an electronic device according to an embodiment;
FIG. 2 is a view illustrating a touch panel region;
FIG. 3 is a view illustrating the touch panel region; and
FIG. 4 is a flowchart illustrating one example of a processing operation of the electronic device according to an embodiment.

### DESCRIPTION OF EMBODIMENT(S)

Preferred embodiments of the present invention will be explained, by way of example only, with reference to accompanying drawings. Note that this embodiment is not to limit the electronic device and the program disclosed in the present application. Furthermore, in the embodiment, a configuration having the same function is denoted with the same reference numeral, and a duplicated description thereof is omitted.

### Example of a configuration of an electronic device

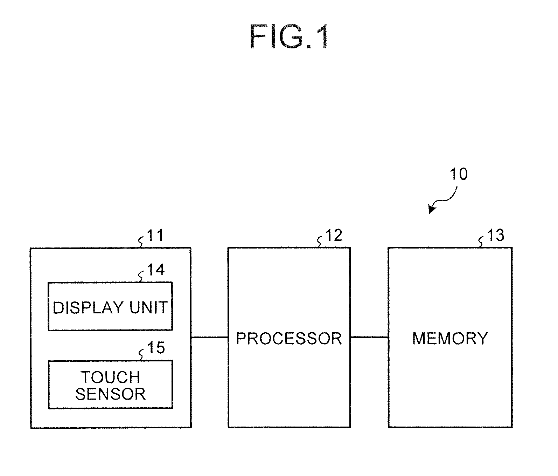

FIG. 1 is a block diagram illustrating one example of an embodiment of an electronic device. In FIG. 1, an electronic device 10 has a touch panel 11, a processor 12, and a memory 13. The electronic device 10 is, for example, a portable terminal. In a case where the electronic device 10 is the portable terminal, it further has an antenna and a radio frequency (RF) circuit that are not illustrated. Then, the touch panel 11 has a display unit 14 and a touch sensor 15. The display unit 14 is, for example, a liquid crystal device. A central processing unit (CPU), a digital signal processor (DSP), a field programmable gate array (FPGA), and the like are listed as one example of the processor 12.

The touch panel 11 is, for example, an electrostatic capacitance type touch panel. The touch panel 11 outputs information regarding a touched position (or, coordinates) and information regarding electrostatic capacitance to the processor 12.

Based on the information received from the touch panel 11, the processor 12 determines whether there is one "touch region" or two or more "touch regions" touched in a "first region" existing in an "outer periphery portion" excluding a "central portion" of the touch panel 11. One touch region is a region constituted of consecutive coordinates having the electrostatic capacitance equal to or more than a threshold. Therefore, two different touch regions are alienated. Furthermore, for example, in a case where a next touch region is detected within a certain time from timing of detecting a touch region for the first time, the processor 12 determines that there are two or more touch regions in the above-described first region. That is, the processor 12 determines that there are two or more touch regions in the above-described first region only after when two or more touch regions are detected simultaneously or during the same period in the above-described first region.

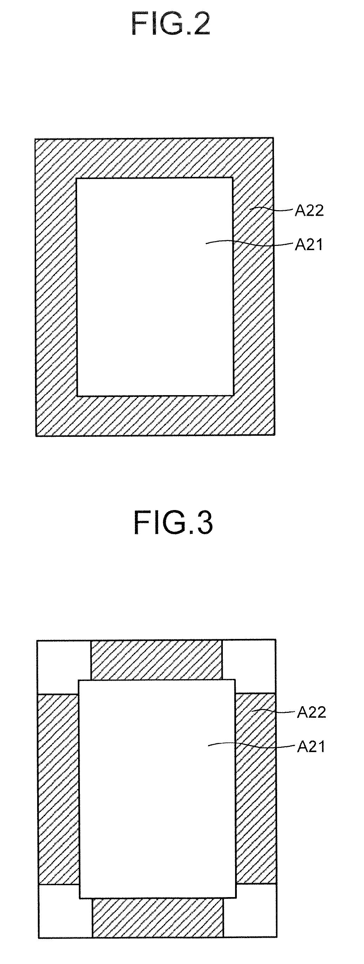

Here, FIG. 2 is a view illustrating a touch panel region. In FIG. 2, inside of an outer frame is the touch panel region. In the touch panel region, an unshaded portion A21 corresponds to the above-described "central portion", and a shaded portion A22 corresponds to the above-described "outer periphery portion". Then, the above-described "first region" may be an entire outer periphery portion or a part of the outer periphery portion. That is, as illustrated in FIG. 3, the "first region" may be, for example, a region excluding four corners of the outer periphery portion (a shaded portion in FIG. 3). FIG. 3 is a view illustrating the touch panel region. It is also possible to configure such that a size of the above-described first region is settable (or, changeable) to an arbitrary value.

Then, in a case where the processor 12 determines that there is one touch region, it validates a "touch operation". On the other hand, in a case where the processor 12 determines that there are two or more touch regions, it invalidates the "touch operation". This processing of validating or invalidating the touch operation and the above-described processing of determining are executed, for example, in a lower layer. That is, in a case where the processor 12 determines that there is one touch region, it outputs information regarding coordinates of the touch region from the lower layer to an upper layer. On the other hand, in a case where the processor 12 determines that there are two or more touch regions, it does not output the information regarding the coordinates of the touch region from the lower layer to the upper layer. The upper layer is, for example, an operating system (OS).

In a case where the touch region is detected in both of the above-described central portion and the above-described first region, the processor 12 may give priority to the touch operation in the central portion and may validate it. That is, the processor 12 outputs the information regarding the coordinates of the touch region in the central portion from the lower layer to the upper layer.

Then, in processing in the upper layer, the processor 12 compares information regarding coordinates obtained by the upper layer with, for example, display coordinates of an icon. In a case where both coordinates match with each other, it executes processing corresponding to the icon.

Note that the processor 12 executes each of the processing by reading a program from the memory 13. Furthermore, in the above description, the processing in the upper layer and the lower layer are executed by one processor 12; however, it is not to be limited to this. It is also possible to execute the processing in the lower layer by a first processor and the processing in the upper layer by a second processor, for example. The first processor may be, for example, an integrated circuit (IC).

The memory 13 stores various programs executed by the processor 12 and various information used by the processor 12. One example of the memory 13 is a random access memory (RAM) such as a synchronous dynamic random access memory (SDRAM), a read only memory (ROM), a flash memory, and the like.

### Example of operation of the electronic device

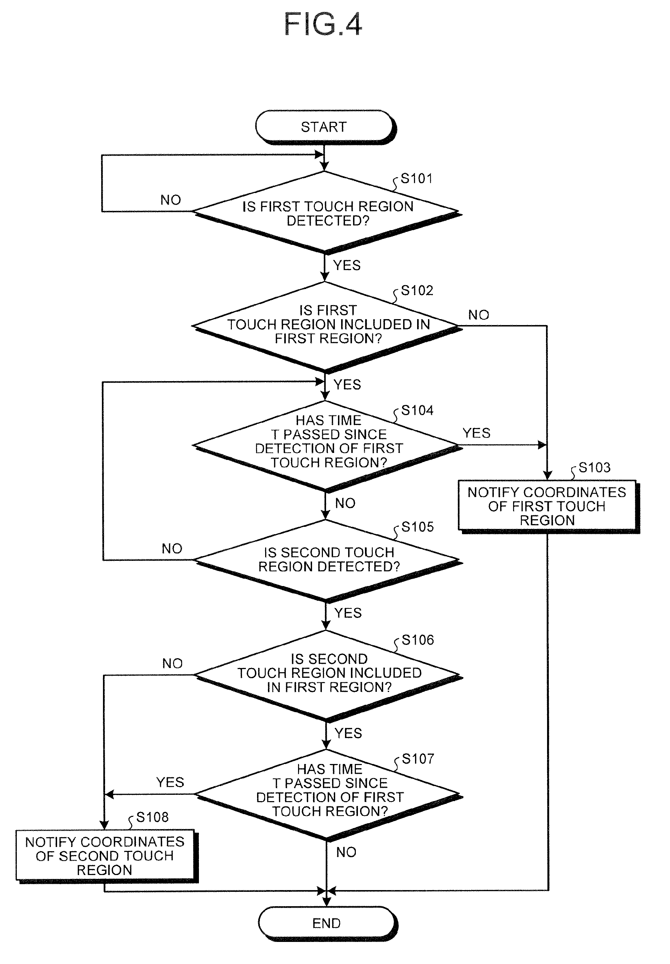

One example of processing operation of the electronic device 10 having the above configuration is described. FIG. 4 is a flowchart illustrating one example of the processing operation of the electronic device according to the embodiment.

A flow illustrated in FIG. 4 is started, for example, when a power supply of the electronic device 10 is turned on.

The processor 12 determines whether a first touch region is detected or not (step S101). This processing in step S101 is repeated until the first touch region is detected (No at step S101). That is, the processor 12 is on standby for a first touch in the touch panel region. Note that the processor 12 starts a timer (not illustrated) at timing of determining that it has detected the first touch region.

Once the processor 12 determines that the first touch region has been detected (Yes at step S101), it determines whether or not the first touch region is included in the above-described "first region" (step S102).

In a case where the first touch region is not included in the above-described first region (No at step S102), or for example, in a case where the above-described central portion is touched, the processor 12 notifies information regarding coordinates of the first touch region from the lower layer to the upper layer (step S103). That is, the touch operation is validated in a case where the touch operation is performed first to the central portion.

In a case where the first touch region is included in the above-described first region (Yes at step S102), the processor 12 determines whether or not time T has passed since detection of the first touch region (step S104).

In a case where the processor 12 determines that the time T has passed since the detection of the first touch region (Yes at step S104), it notifies the information regarding the coordinates of the first touch region from the lower layer to the upper layer (step S103). That is, in a case where only the first touch region is detected during the time T, the processor 12 validates the touch operation even if the first touch region is in the outer periphery portion of the touch panel region. This is because, in a case where a user touches the outer periphery portion of the touch panel region while holding the electronic device 10, it is anticipated that the user may touch it with two or more fingers during the same period. On the other hand, in a case where only one touch region is detected during the same period, it is possible to determine that the user has intentionally touched it.

In a case where the processor 12 determines that the time T has not passed since the detection of the first touch region (No at step S104), it determines whether or not a second touch region is detected (step S105).

In a case where it is determined that the second touch region is not detected (No at step S105), the processor 12 performs the processing of determining in step S104. That is, the processing in steps S104 and S105 are repeated until it is determined that the time T has passed since the detection of the first touch region.

In a case where the processor 12 determines that the second touch region is detected (Yes at step S105), it determines whether or not the second touch region is included in the above-described "first region" (step S106).

In a case where the processor 12 determines that the second touch region is included in the above-described "first region" (Yes at step S106), it determines whether or not the time T has passed since the detection of the first touch region (step S107).

In a case where the processor 12 determines that the time T has not passed since the detection of the first touch region (No at step S107), it ends the flow illustrated in FIG. 4. That is, in a case where both of the first touch region and the second touch region are detected within the time T since the detection of the first touch region in the above-described "first region", it can be anticipated that the user has unintentionally touched the outer periphery portion of the touch panel region while holding the electronic device 10. Therefore, in this case, it is possible to prevent wrong operation by the user by invalidating touch operations corresponding to the first touch region and the second touch region.

The processor 12 executes processing in step S108 in a case where it determines that the second touch region is not included in the above-described "first region" (No at step S106) or in a case where it determines that the second touch region is detected after the time T has passed since the detection of the first touch region (Yes at step S107). That is, the processor 12 notifies information regarding coordinates of the second touch region from the lower layer to the upper layer (step S108). Note that as the processing in step S108, the information regarding the coordinates of the second touch region is notified here; however, it is also possible to notify the information regarding the coordinates of the first touch region instead. Furthermore, it is also possible to notify both of the information regarding the coordinates of the first touch region and the information regarding the coordinates of the second touch region. In short, at least any one of the information regarding the coordinates of the first touch region and the information regarding the coordinates of the second touch region may be notified.

As above, according to this embodiment, in the electronic device 10, the processor 12 determines whether there is one touch region or two or more touch regions touched in the first region existing in the outer periphery portion excluding the central portion of the touch panel 11. Then, in a case where the processor 12 determines that there is one touch region, it validates the touch operation. In a case where it determines that there are two or more touch regions, it invalidates the touch operation. For example, the processor 12 determines that there are two or more touch regions in the above-described first region in a case where the next touch region (the above-described second touch region) is detected within a certain time from the timing of detecting the touch region (the above-described first touch region) for the first time.

With this configuration of the electronic device 10, it is possible to invalidate the touch operation in a case where it can be anticipated that the user has unintentionally touched the outer periphery portion of the touch panel region while holding the electronic device 10, whereby the wrong operation by the user can be prevented. It is also possible validate the touch operation in a case where it can be anticipated that the user has intentionally touched the outer periphery portion of the touch panel region. For example, it is possible to validate a touch operation of an icon displayed in the outer periphery portion of the touch panel 11, an operation to display a launcher by a swipe operation starting from the outer periphery portion of the touch panel 11, and the like. Therefore, it is possible to improve convenience of the user.

Furthermore, the processor 12 executes the above-described determination on whether there is one touch region or two or more touch regions in the processing in the lower layer. Then, in a case where the processor 12 determines that there is one touch region, it outputs the information regarding the coordinates of the touch region to the upper layer. In a case where it determines that there are two or more touch regions, it does not output the information regarding the coordinates of the touch region to the upper layer.

With this configuration of the electronic device 10, in processing in the lower layer, it is possible to invalidate the touch operation in a case where it can be anticipated that the user has unintentionally touched the outer periphery portion of the touch panel region while holding the electronic device 10, whereby the wrong operation by the user can be prevented. It is possible to validate the touch operation in a case where it can be anticipated that the user has intentionally touched the outer periphery portion of the touch panel region, whereby it is possible to improve the convenience of the user.

Furthermore, in a case where the touch region is detected in both of the above-described second region existing in the central portion and the above-described first region of the touch panel 11, the processor 12 may give priority to the touch operation in the above-described second region and may validate it.

With this configuration of the electronic device 10, it is possible to execute processing in accordance with the touch operation in the second region regardless of detection of the touch region in the above-described first region, whereby it is possible to save the time in executing the processing as well as to improve the convenience of the user.

According to a disclosed aspect of an embodiment, it is possible to suppress the wrong operation by the user and the decrease in the convenience of the user.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An electronic device (10) comprising:
a touch panel (11); and
a processor (12) connected to the touch panel (11), wherein
the processor (12) is configured to perform determination whether there is one touch region or two or more touch regions touched in a first region existing in an outer periphery portion excluding a central portion of the touch panel (11), and
the processor (12) is configured to validate a touch operation in a case where it is determined that there is one touch region, and the processor (12) is configured to invalidate the touch operation in a case where it is determined that there are two or more touch regions.

2. The electronic device (10) according to claim 1, wherein
the processor (12) is configured to determine that there are two or more touch regions in a case where it detects a next touch region within a certain time from timing of detecting the touch region for the first time in the first region.

3. The electronic device (10) according to claim 1 or 2, wherein
the processor (12) is configured to perform the determination in processing in a lower layer, and
in a case where it is determined that there is one touch region, the processor (12) is configured to output information regarding coordinates of the touch region to an upper layer, and
in a case where it is determined that there are two or more touch regions, the processor (12) does not output the information regarding the coordinates of the touch region to the upper layer.

4. The electronic device (10) according to any one of claims 1 to 3, wherein
in a case where the touch region is detected in both of the first region and a second region existing in the central portion, the processor (12) is configured to give priority to and validate the touch operation in the second region.

5. A program for causing an electronic device (10) to execute a process, the process comprising:
determining whether there is one touch region or two or more touch regions touched in a first region existing in an outer periphery portion excluding a central portion of a touch panel (11); and
validating a touch operation in a case where it is determined that there is one touch region, and invalidating the touch operation in a case where it is determined that there are two or more touch regions.

6. A process of an electronic device (10), the process comprising:
determining whether there is one touch region or two or more touch regions touched in a first region existing in an outer periphery portion excluding a central portion of a touch panel (11); and
validating a touch operation in a case where it is determined that there is one touch region, and invalidating the touch operation in a case where it is determined that there are two or more touch regions.
